# EUROPÄISCHE PATENTSCHRIFT

(11) **EP 2 001 296 B1**
(45) Veröffentlichungstag und Bekanntmachung des Hinweises auf die Patenterteilung: **26.11.2014**
(21) Anmeldenummer: 07723229.6
(22) Anmeldetag: 14.03.2007
(51) Int. Cl.: A01N 43/40, A01N 43/08, A01N 43/82, A01N 25/04, A01P 13/00

(54) **HERBIZIDE MITTEL ALS DISPERSIONEN ENTHALTEND DIFLUFENICAN UND FLURTAMONE**
HERBICIDAL COMPOSITIONS AS DISPERSIONS COMPRISING DIFLUFENICAN AND FLURTAMONE
AGENTS HERBICIDES SOUS FORME DE DISPERSIONS CONTENANT DU DIFLUFENICAN ET DE LA FLURTAMONE

(30) Priorität: 29.03.2006 EP 06006526; 20.09.2006 EP 06019647
(43) Veröffentlichungstag der Anmeldung: 17.12.2008
(60) Teilanmeldung: 10159094.1
(73) Patentinhaber: Bayer CropScience AG, 40789 Monheim (DE)
(72) Erfinder: FRISCH, Gerhard, 61273 Wehrheim (DE); RUDE, Janine, 65830 Kriftel (DE)
(86) Internationale Anmeldenummer: PCT/EP2007/002219
(87) Internationale Veröffentlichungsnummer: WO 2007/112834

(56) Entgegenhaltungen:
- EP-A1- 0 531 116
- EP-A2- 1 642 498
- WO-A-02/19821
- WO-A-03/028467
- DATABASE CROPU [Online] ORTMAYR J: "Herold - for fall bentgrass and weed control in winter cereals. (Herold - zur Windhalm- und Unkrautbekaempfung im Herbst in Wintergetreide)" XP002454010 gefunden im STN Database accession no. 1999-88286 & PFLANZENARZT (52, NO. 9-10, 20-21, 1999) 1 FIG. 1 TAB. CODEN: PFLZAQ AV - NO REPRINT ADDRESS., 1999,

## Beschreibung

Die vorliegende Erfindung betrifft das Gebiet der Pflanzenschutzmittelformulierungen. Insbesondere betrifft die Erfindung
- Formulierungen in Form von wässrigen Dispersionen, welche mindestens die herbiziden Wirkstoffe Diflufenican und Flurtamone enthalten und nach Austausch von Alkylphenolpolyethoxylaten in den Formulierungen lagerstabil sind.

Herbizide Wirkstoffe werden im Allgemeinen nicht in ihrer reinen Form eingesetzt. In Abhängigkeit von dem Anwendungsgebiet und der Anwendungsart, sowie von physikalischen, chemischen und biologischen Parametern werden die Wirkstoffe in Mischung mit üblichen Hilfs- und Zusatzstoffen als Wirkstoffformulierung eingesetzt. Auch die Kombinationen mit weiteren Wirkstoffen zur Erweiterung des Wirkungsspektrums und/oder zum Schutz der Kulturpflanzen (z.B. durch Safener, Antidote) sind bekannt.

Formulierungen von herbiziden Wirkstoffen sollten im Allgemeinen eine hohe chemische und physikalische Stabilität, eine gute Applizierbarkeit und Anwenderfreundlichkeit und eine breite biologische Wirkung mit hoher Selektivität aufweisen.

Wässrige Dispersionen für herbizide Wirkstoffe sind bekannt, u.a. aus EP-A-0514768 (US 5,707,926) oder EP-A-0592880 (US 5,376,621).Daneben beschreibt EP 1642498 A2 wässrige Dispersionen, die Diflufenican enthalten und frei von Alkylphenolpolyethoxylat sind. Die Wirkstoffkombination von Diflufenican und Flurtamone wird EP 0531116 A1 beschrieben und die Wirkstoffkombination von Diflufenican und Flufenacet ist sowohl publiziert (Ortmayr, Johannes: Herold - zur Windhalm- und Unkrautbekämpfung im Herbst in Wintergetreide; in: Der Pflanzenarzt, Band 52, Nr. 9-10, S. 20-21, 1999), wie auch in WO 2003/028467 A1 beschrieben worden.

Die herbiziden Wirkstoffe Diflufenican und Flurtamone werden allein und als Mischung (Tank-Mix, Co-Formulierung) unter Anderem als wässrige Suspensionskonzentrate (SC), beispielsweise mit dem Handelsnamen Carat® 350 SC, verwendet. Nachteil der diesem oder ähnlichen Produkten zu Grunde liegenden Formulierungen ist die Tatsache, dass sie Tenside aus der Gruppe der Alkylphenolpolyethoxylate (APE) enthalten, die auf Grund ihrer verzögerten biologischen Abbaubarkeit als bedenklich eingestuft werden. Bei dem Versuch APEfreie Formulierungen für diese Wirkstoff-Mischung herzustellen, kam es zu unerwünschten Effekten, wie Ausflockungen, Agglomerationen und/oder Kristallwachstum, wodurch eine ausreichende Lagerstabilität nicht mehr gewährleistet ist.

Die Aufgabe der vorliegenden Erfindung bestand darin,
- eine wässrige Pflanzenschutzmittelformulierung bereit zu stellen, die mindestens die Wirkstoffe Diflufenican und Flurtamone enthält, frei von Alkylphenolpolyethoxylaten ist und eine ausreichende Lagerstabilität aufweist.

Diese Aufgabe wird gelöst durch
- wässrige Dispersionen, enthaltend Diflufenican und Flurtamone, und einer 'Tensid-Organosäuren-Mischung' bestehend aus anionischen Tensiden aus der Gruppe Naphthalinsulfonate oder aus der Gruppe der der Kondensationsprodukte von Naphthalinsulfonaten mit Formaldehyd, nichtionischen Tensiden aus der Gruppe der Di- und Tri-block-copolymere aus Alkylenoxiden und mehrbasigen organischen Säuren, der gegebenenfalls noch Verdicker, weitere agrochemische Wirkstoffe, vorzugsweise Flufenacet, und weitere übliche Hilfs- und Zusatzstoffe zugesetzt werden können.

Die vorliegende Erfindung betrifft somit wässrige Dispersionen, enthaltend
a) die herbiziden Wirkstoffe Diflufenican und Flurtamone,
b) ein oder mehrere anionische Tenside aus der Gruppe der Naphthalinsulfonate oder aus der Gruppe der Kondensationsprodukte von Naphthalinsulfonaten mit Formaldehyd,
c) ein oder mehrere nichtionische Tenside aus der Gruppe der Di- und Tri-block-copolymere aus Alkylenoxiden,
d) eine oder mehrere mehrbasige organische Säuren,
e) gegebenenfalls einen oder mehrere Verdicker,
f) gegebenenfalls einen oder mehrere von Komponente a) verschiedene agrochemische Wirkstoffe, vorzugsweise den herbiziden Wirkstoff Flufenacet,
g) gegebenenfalls einen oder mehrere weitere übliche Hilfs- und Zusatzstoffe,
und
Wasser.

Die erfindungsgemäßen Dispersionen zeigen eine hervorragende Lagerstabilität. Sie sind bei Raumtemperatur mindestens 2 Jahre lagerstabil und zeigen dabei keine unerwünschten Effekte, wie z.B. Kristallwachstum.

In einer bevorzugten Ausführungsform enthalten diese Dispersionen
a) 0,1 bis 50% Diflufenican und 0,1 bis 50% Flurtamone,
b) 0,1 bis 10% eines oder mehrerer anionischer Tenside aus der Gruppe der Naphthalinsulfonate oder aus der Gruppe der Kondensationsprodukte von Naphthalinsulfonaten mit Formaldehyd,
c) 0,1 bis 20% eines oder mehrerer nichtionischer Tenside aus der Gruppe der Di- und Tri-block-copolymere aus Alkylenoxiden,
d) 0,05 bis 10% einer oder mehrerer mehrbasiger organischer Säuren,
e) 0 bis 5% eines oder mehrerer Verdicker,
f) 0 bis 50% eines oder mehrerer von Komponente a) verschiedener agrochemischer Wirkstoffe, vorzugsweise 0,1 bis 50% Flufenacet,
g) 0 bis 20% eines oder mehrerer weiterer üblicher Hilfs- und Zusatzstoffe,
   und
   20 bis 70% Wasser.

Eine besonders bevorzugte Ausführungsform sind erfindungsgemäße Dispersionen, worin enthalten sind
a) 0,5 bis 20% Diflufenican und 0,5 bis 30% Flurtamone,
b) 0,2 bis 5% eines oder mehrerer anionischer Tenside aus der Gruppe der Naphthalinsulfonate oder aus der Gruppe der Kondensationsprodukte von Naphthalinsulfonaten mit Formaldehyd,
c) 0,5 bis 14% eines oder mehrerer nichtionischer Tenside aus der Gruppe der Di- und Tri-block-copolymere aus Alkylenoxiden,
d) 0,1 bis 5% einer oder mehrerer mehrbasiger organischer Säuren,
e) 0,05 bis 2,5% eines oder mehrerer Verdicker,
f) 0 bis 40% eines oder mehrerer von Komponente a) verschiedener agrochemischer Wirkstoffe, vorzugsweise 0,5 bis 22% Flufenacet,
g) 0 bis 15% eines oder mehrerer weiterer üblicher Hilfs- und Zusatzstoffe,
   und
   20 bis 60% Wasser.

Eine ganz besonders bevorzugte Ausführungsform sind erfindungsgemäße Dispersionen, worin enthalten sind
a) 2 bis 16% Diflufenican und 4 bis 22% Flurtamone,
b) 0,3 bis 1,5% eines oder mehrerer anionischer Tenside aus der Gruppe der Naphthalinsulfonate oder aus der Gruppe der Kondensationsprodukte von Naphthalinsulfonaten mit Formaldehyd,
c) 1 bis 10% eines oder mehrerer nichtionischer Tenside aus der Gruppe der Di- und Tri-block-copolymere aus Alkylenoxiden,
d) 0,2 bis 2% einer oder mehrerer mehrbasiger organischer Säuren,
e) 0,075 bis 1,5% eines oder mehrerer Verdicker,
f) 4 bis 22% Flufenacet,
g) 0 bis 15% eines oder mehrerer weiterer üblicher Hilfs- und Zusatzstoffe,
   und
   30 bis 55% Wasser.

Alle Prozentangaben sind hier und in der gesamten Beschreibung Gewichtsprozente (Gew.-%) und beziehen sich, wenn nicht anders definiert, auf das relative Gewicht der jeweiligen Komponente bezogen auf das Gesamtgewicht der Formulierung.

Die herbiziden Wirkstoffe a) Diflufenican (251) und Flurtamone (392) sind als Einzelstoffe oder als Mischung z.B. bekannt aus "The Pesticide Manual", 13. Auflage (2003), The British Crop Protection Council (Anmerkung: Verzeichnisnummer in Klammern).
Der Anteil dieser Wirkstoffe in den erfindungsgemäßen Dispersionen (Komponente a) kann für Diflufenican 0,1 - 50 Gew.-%, bevorzugt 0,5 - 20 Gew.-%, besonders bevorzugt 2 - 16 Gew.-%, und für Flurtamone 0,1 - 50 Gew.-%, bevorzugt 0,5 - 30 Gew.-%, besonders bevorzugt 4 - 22 Gew.-% betragen.

Beispiele für anionische Tenside b) aus der Gruppe der Naphthalinsulfonate sind Galoryl® MT 800 (Natrium-Dibutylnaphthalinsulfonsäure) und Nekal® BX (Alkylnaphthalinsulfonat). Beispiele für anionische Tenside b) aus der Gruppe der Kondensationsprodukte von Naphthalinsulfonaten mit Formaldehyd sind Galoryl® DT 201 (Naphthalinsulfonsäure Hydroxypolymer mit Formaldehyd und Methylphenol Natriumsalz), Galoryl® DT 250 (Kondensationsprodukt aus Phenol- und Naphthalinsulfonaten), Reserve® C (Kondensationsprodukt aus Phenol- und Naphthalinsulfonaten). Bevorzugt sind 1,2 mit Di-Butyl- oder Di-Isobutyl-substituierte Naphthalinsulfonate, wie z.B. Produkte wie Galoryl® MT 800 (CFPI-Nufarm) und Nekal® BX (BASF).
Der Anteil der anionischen Tenside in den erfindungsgemäßen Dispersionen (Komponente b) kann 0,1 - 10 Gew.-%, bevorzugt 0,2 - 5 Gew.-%, besonders bevorzugt 0,3 - 1,5 Gew.-% betragen.

Als nichtionische Tenside c) aus der Gruppe der Di- und Tri-block-copolymere aus Alkylenoxiden kommen z.B. Verbindungen in Frage, die auf Basis von Ethylen- und Propylenoxid aufgebaut sind, mit mittleren Molmassen zwischen 200 und 10000, vorzugsweise 1000 bis 4000 g/mol, wobei der Massenanteil des polyethoxylierte Blocks zwischen 10 und 80% variiert, wie z.B. Synperonic® PE-Reihe (Uniqema), Pluronic® PE-Reihe (BASF), VOP® 32- oder Genapol® PF-Reihe (Clariant). Bevorzugt sind z.B. Produkte wie Pluronic® PE 10500.
Der Anteil der nichtionischen Tenside in den erfindungsgemäßen Dispersionen (Komponente c) kann 0,1 - 20 Gew.-%, bevorzugt 0,5 - 14 Gew.-%, besonders bevorzugt 1 - 10 Gew.-% betragen.

Beispiele für mehrbasige organische Säuren d) sind z.B. Citronensäure, Weinsäure, Bersteinsäure, Maleinsäure, Fumarsäure etc. Bevorzugt ist Citronensäure.
Der Anteil der mehrbasigen organischen Säuren in den erfindungsgemäßen Dispersionen (Komponente d) kann 0,05 - 10 Gew.-%, bevorzugt 0,1 - 5 Gew.-%, besonders bevorzugt 0,2 - 2 Gew.-% betragen.

Gegebenenfalls zugesetzte, geeignete Verdickungsmittel e) sind beispielsweise:
1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel),
2) Verdicker auf Basis synthetischer Polymere, wie Verdicker der Thixin®- oder Thixatrol®-Reihe (Elementis) sowie Rhodopol® (Rhodia) und Kelzan® S (Kelco Corp.),
3) synthetische Silikate, wie Silikate der Sipernat®-, Aerosil®- oder Durosil®-Reihe (Degussa), der CAB-O-SIL®-Reihe (Cabot) oder der Van Gel-Reihe (R.T. Vanderbilt).
Bevorzugt sind Verdicker auf organischer und/oder anorganischer Basis, wie z.B. Produkte wie Bentone® EW (Elementis) und Rhodopol® 23 (Rhodia).
Der Anteil gegebenenfalls zugesetzter Verdicker in den erfindungsgemäßen Dispersionen (Komponente e) kann bis 5 Gew.-%, bevorzugt 0,05 - 2,5 Gew.-%, besonders bevorzugt 0,075 - 1,5 Gew.-% betragen.

Als gegebenenfalls zugesetzte von Komponente a) verschiedene agrochemische Wirkstoffe f) sind geeignet Herbizide, Fungizide, Insektizide, Pflanzenwachstumsregulatoren, Safener und dergleichen. Diese Wirkstoffe sind z.B. bekannt aus "The Pesticide Manual", 13. Auflage (2003), The British Crop Protection Council (Anmerkung: Verzeichnisnummer in Klammern).
Bevorzugt sind Herbizide wie Flufenacet (369), loxynil (467), Bromoxynil (95), Bifenox (75), Aclonifen (8), Trifluralin (836), Clodinafop-propargyl (156), Oxadiazon (600), Oxadiargyl (599), Pyraflufen-ethyl (691), Carbetamide (117), Terbuthylazine (775), Wirkstoffe auf Phenylharnstoffbasis wie Isoproturon (475), Diuron (281), Linuron (489), Wirkstoffe auf Basis von Phenoxyessig- bzw -propion- und - buttersäuren wie MCPA (499), Mecoprop (503), Mecoprop-P (504), 2,4-D (211), Fluazifop-butyl (361), Diclofop-methyl (238), Fenoxaprop-P-ethyl (339), sowie jeweils deren Derivate in Form von Säuren oder Estern. Besonders bevorzugt sind die herbiziden Wirkstoffe Flufenacet und Isoproturon, ganz besonders bevorzugt Flufenacet.
Der Anteil gegebenenfalls zugesetzter von Komponente a) verschiedener agrochemischer Wirkstoffe in den erfindungsgemäßen Dispersionen (Komponente f) kann bis 50 Gew.-%, bevorzugt bis 40 Gew.-%, besonders bevorzugt bis 30 Gew.-% betragen. Im Falle des herbiziden Wirkstoffs Flufenacet kann der Anteil 0,1 - 50 Gew.-%, bevorzugt 0,5 - 22 Gew.-%, besonders bevorzugt 4 - 22 Gew.-% betragen.

Die gegebenenfalls zugesetzten weiteren üblichen Hilfs- und Zusatzstoffe g) sind beispielsweise Entschäumer, Frostschutzmittel, strukturbildende Stoffe, Konservierungsmittel, Antioxidantien, Farb- und Duftstoffe, Netz-, Anti-Drift-, Haft- und Penetrationsmittel (Adjuvantien), Düngemittel, sowie weitere von den Komponenten b) und c) verschiedene Tenside.

Geeignete Entschäumer sind oberflächenaktive Verbindungen auf Silikon- bzw. Silanbasis wie die Tegopren®-Produkte (Goldschmidt), die SE®-Produkte (Wacker), sowie die Bevaloid®-, Rhodorsil®- und Silcolapse®-Produkte (Rhodia, Dow Corning, Reliance, GE, Bayer), bevorzugt sind SE®- (Wacker), Rhodorsil®-und Silcolapse®-Produkte (Rhodia), besonders bevorzugt sind z.B. Produkte wie Silcolapse® 5020. Geeignete Frostschutzmittel sind solche aus der Gruppe der Harnstoffe, Diole und Polyole, wie Ethylenglycol und Propylenglycol, bevorzugt Propylenglycol. Geeignete Konservierungsmittel sind z.B. Produkte wie Acticide® MBS (Biozid, Thor Chemie).
Geeignete Antioxidantien, Farb- und Duftstoffe, Netz-, Anti-Drift-, Haft- und Penetrationsmittel (Adjuvantien) sowie Düngemittel sind dem Fachmann bekannt. Geeignete weitere von den Komponenten b) und c) verschiedene Tenside sind beispielsweise Emulgatoren und Dispergatoren.

Als Emulgatoren und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   - mit 8 bis 24 C-Atomen im Alkylrest, der sich von den entsprechenden Fettsäuren oder aus petrochemischen Produkten ableitet, und
   - mit 1 bis 100, vorzugsweise 2 bis 50, Ethylenoxideinheiten (EO), wobei die freie Hydroxy-Gruppe gegebenenfalls alkoxyliert ist, und
   - die z.B. kommerziell als Genapol® X- und Genapol® O-Reihe (Clariant), Crovol® M-Reihe (Croda) oder Lutensol®-Reihe (BASF) erhältlich sind;
2) polyalkoxylierte, vorzugsweise polyethoxylierte Hydroxyfettsäuren oder Hydroxyfettsäuren enthaltene Glyceride, wie z.B. Ricinin bzw. Rizinusöl, mit einem Ethoxylierungsgrad zwischen 10 und 80, bevorzugt 25 bis 40, wie z.B. Emulsogen® EL-Reihe (Clariant) oder Agnique® CSO-Reihe (Cognis);
3) polyalkoxylierte, vorzugsweise polyethoxylierte Sorbitanester, wie z. B. Atplus® 309 F (Uniqema) oder Alkamuls®-Reihe (Rhodia).
Bevorzugte nichtionische Emulgatoren und Dispergatoren sind z.B. polyethoxylierte Alkohole und polyethoxylierte Triglyceride, die Hydroxyfettsäuren enthalten.

Es kommen auch ionische Emulgatoren und Dispergatoren in Frage, z.B.:
1) polyalkoxylierte, vorzugsweise polyethoxylierte Emulgatoren/Dispergatoren, die ionisch modifiziert sind, z.B. durch Umsetzung der endständigen freien Hydroxylfunktion des Polyethylenoxidblocks zu einem Sulfat- oder Phosphatester (z.B. als Alkali- und Erdalkalimetallsalze), wie z.B. Genapol® LRO oder Dispergiermittel 3618 (Clariant), Emulphor® (BASF) oder Crafol® AP (Cognis);
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox® 3377BM (ICI), Empiphos® TM-Reihe (Huntsman);
3) Polyelektrolyte, wie Ligninsulfonate, Polystyrolsulfonat oder sulfonierte ungesättigte oder aromatische Polymere (Polystyrole, Polybutadiene oder Polyterpene), wie Tamol®-Reihe (BASF), Morwet® D425 (Witco), Kraftsperse®-Reihe (Westvaco), Borresperse®-Reihe (Borregard).

Bevorzugte ionische Emulgatoren/Dispergatoren sind z.B. Salze von Alkylarylsulfonsäuren und Ligninsulfonate.

Der Anteil der gegebenenfalls zugesetzten weiteren üblichen Hilfs- und Zusatzstoffe in den erfindungsgemäßen Dispersionen (Komponente g) kann bis 20 Gew.-%, bevorzugt bis 15 Gew.-% betragen.

Der Anteil der Komponente Wasser in den erfindungsgemäßen Dispersionen kann 20 - 70 Gew.-%, bevorzugt 20 - 60 Gew.-%, besonders bevorzugt 30 - 55 Gew.-% betragen.

Die vorstehend genannten Formulierungshilfsmittel der Komponenten b), c), d), e) und g) sind dem Fachmann bekannt und/oder werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, 4. Aufl., C. Hanser Verlag, München 1986.

Zur Anwendung können die erfindungsgemäßen Dispersionen in üblicher Weise verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, auf Basis der erfindungsgemäßen Dispersionen.

Die erfindungsgemäßen Dispersionen oder herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen Dispersionen oder herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.
Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der anquellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Dispersionen oder herbiziden Mitteln ebenfalls hervorragend bekämpft.

Werden die erfindungsgemäßen Dispersionen oder herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen Dispersionen oder herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird..

Die erfindungsgemäßen Dispersionen oder herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den herbiziden Mitteln verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Dispersionen hinsichtlich der beschriebenen Eigenschaften deutlich übertroffen.

Obgleich die erfindungsgemäßen Dispersionen oder herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die erfindungsgemäßen Dispersionen oder herbiziden Mitteleignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen Dispersionen oder herbiziden Mittelhervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen Dispersionen oder herbiziden Mittelauch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Dispersionen oder herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Dispersionen oder Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen Dispersionen oder herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße Dispersionen oder herbiziden Mittelauf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Die Herstellung der erfindungsgemäßen Dispersionen kann nach dem Fachmann bekannten Verfahren erfolgen; beispielsweise nach Houben-Weil durch Nassvermahlung mittels Perlmühle (siehe: Winnacker-Küchler, "Chemische Technologie", Band 7, 4. Aufl., C. Hanser Verlag, München 1986; Wade van Valkenburg, "Pesticide Formulations", Marcel Dekker, N.Y. 1973; K. Martens, "Spray Drying" Handbook, 3rd Ed., G. Goodwin Ltd., London 1979). Von Vorteil ist hierbei gegebenenfalls eine gleichmäßige Partikelverteilung der betreffenden Wirkstoffe, um zusätzlich Kristallwachstum und Ausflockung weiter zu verhindern.

In der nachfolgenden Tabelle finden sich Beispiele für erfindungsgemäße wässrige Dispersionen.

Die in den nachfolgenden Beispielen verwendeten Begriffe haben folgende Bedeutung:
- Diflufenican: = Common name (BSI, draft E-ISO, (m) draft F-ISO); IUPAC name: 2',4'-difluoro-2-(α,α,α-trifluoro-*m-*tolyloxy)nicotinanilide (Bayer CropScience)
- Flurtamone: = Common name (BSI, ANSI, draft E-ISO); IUPAC name: (*RS*)-5-methylamino-2-phenyl-4-(α,α,α-trifluoro-*m-*tolyl)furan-3(2*H*)-one (Bayer CropScience)
- Nekal® BX: = Alkyl-Naphthalinsulfonsäure-Natriumsalz (BASF)
- Pluronic® PE 10500: = Propylenoxid-Ethylenoxid-(PO-EO)-Blockpolymer (BASF)
- Citronensäure: = mehrbasige organische Säure
- Bentone® EW: = modifiziertes Schichtsilikat (Elementis)
- Rhodopol® 23: = Xanthan Derivat (Rhodia)
- Flufenacet: = Common name (BSI, pa ISO); IUPAC name: 4'-fluoro-N-isopropyl-2-(5-trifluoromethyl-1,3,4-thiadiazol-2-yloxy)acetanilide (Bayer CropScience)
- Silcolapse® 5020: = Silikon-Entschäumer (Rhodia)
- Propylenglykol: = Frostschutzmittel
- Acticide® MBS: = Konservierungsmittel (Biozid, Thor Chemie)

### Herstellung einer wässrigen Dispersion:

Zur Herstellung der in Tabelle 1 genannten Beispiele wird zunächst Wasser vorgelegt. Unter Rühren werden anschließend Diflufenican und Flurtamone sowie die weiteren Rezepturbestandteile zugesetzt. Die Reihenfolge der Zugabe der weiteren Komponenten spielt in der Regel keine Rolle. Anschließend erfolgt gegebenenfalls eine Nassvermahlung beispielsweise mittels Perlmühle.

**Tabelle 1 (Angaben erfolgen in Gewichtsprozent)**

| Komponente | | Beispiel-Nr. | | | | | | |
|---|---|---|---|---|---|---|---|---|
| | | 1 | 2 | 3 | 4 | 5 | 6 | 7 |
| a | Diflufenican | 10,7 | 10,5 | 10,3 | 15,7 | 8 | 4 | 12 |
| a | Flurtamone | 10,7 | 10,5 | 14,8 | 11 | 20 | 8 | 12 |
| b | Nekal® BX | 0,5 | 0,7 | 0,8 | 0,6 | 0,4 | 0,6 | 1 |
| c | Pluronic® PE 10500 | 5 | 6 | 6,3 | 7 | 7 | 7 | 6 |
| d | Citronensäure | 0,5 | 0,6 | 0,7 | 0,7 | 0,4 | 0,6 | 1 |
| e | Bentone® EW | 0,1 | 0,1 | 0,1 | 0,2 | 0,1 | 0,1 | 0,1 |
| e | Rhodopol® 23 | 0,1 | 0,2 | 0,1 | 0,1 | 0,2 | 0,2 | 0,1 |
| f | Flufenacet | 10,7 | 15,3 | 10,3 | 11 | 8 | 22 | 12 |
| g | Silcolapse® 5020 | 1 | 0,8 | 1,2 | 1 | 1,5 | 1 | 1 |
| g | Propylenglykol | 8 | 7 | 7,5 | 6 | 10 | 9 | 8 |
| g | Acticide® MBS | 0,2 | 0,1 | 0,2 | 0,2 | 0,2 | 0,2 | 0,2 |
| Wasser | | 52,5 | 48,2 | 47,7 | 46,5 | 44,2 | 47,3 | 46,6 |
| Gesamt: | | 100 | 100 | 100 | 100 | 100 | 100 | 100 |

### Stabilität der wässrigen Dispersion:

Die erfindungsgemäßen Dispersionen der Beispiele 1 bis 7 weisen eine ausgezeichnete Lagerstabilität auf. Sie sind bei Raumtemperatur mindestens 2 Jahre und bei 50°C mindestens 3 Monate ohne erkennbare Veränderung stabil.

### Herbizide Wirkung:

Die herbizide Wirkung der erfindungsgemäßen Dispersionen gegenüber allen wichtigen Schadpflanzen erreicht mindestens die Höhe der aus dem Stand der Technik bekannten APE-haltigen Dispersionen beziehungsweise herbiziden Mitteln enthaltend Diflufenican und Flurtamone (als Einzelstoffe und in Mischung untereinander und/oder weiteren agrochemischen Wirkstoffen).

## Patentansprüche

1. Wässrige Dispersionen, enthaltend
a) die herbiziden Wirkstoffe Diflufenican und Flurtamone,
b) ein oder mehrere anionische Tenside aus der Gruppe der Naphthalinsulfonate oder aus der Gruppe der Kondensationsprodukte von Naphthalinsulfonaten mit Formaldehyd,
c) ein oder mehrere nichtionische Tenside aus der Gruppe der Di- und Tri-blockcopolymere aus Alkylenoxiden,
d) eine oder mehrere mehrbasige organische Säuren,
und
Wasser.

2. Dispersionen gemäß Anspruch 1, zusätzlich enthaltend einen oder mehrere Verdicker (Komponente e).

3. Dispersionen gemäß Anspruch 1 oder 2, zusätzlich enthaltend einen oder mehrere von Komponente a) verschiedene agrochemische Wirkstoffe (Komponente f), vorzugsweise den herbiziden Wirkstoff Flufenacet.

4. Dispersionen gemäß einem oder mehreren der Ansprüche 1 bis 3, zusätzlich enthaltend einen oder mehrere weitere übliche Hilfs- und Zusatzstoffe (Komponente g).

5. Dispersionen gemäß einem oder mehreren der Ansprüche 1 bis 4, enthaltend
a) 0,1 bis 50% Diflufenican und 0,1 bis 50% Flurtamone,
b) 0,1 bis 10% eines oder mehrerer anionischer Tenside aus der Gruppe der Naphthalinsulfonate oder aus der Gruppe der Kondensationsprodukte von Naphthalinsulfonaten mit Formaldehyd,
c) 0,1 bis 20% eines oder mehrerer nichtionischer Tenside aus der Gruppe der Di- und Tri-block-copolymere aus Alkylenoxiden,
d) 0,05 bis 10% einer oder mehrerer mehrbasiger organischer Säuren,
e) 0 bis 5% eines oder mehrerer Verdicker,
f) 0 bis 50% eines oder mehrerer von Komponente a) verschiedener agrochemischer Wirkstoffe, vorzugsweise 0,1 bis 50% Flufenacet,
g) 0 bis 20% eines oder mehrerer weiterer üblicher Hilfs- und Zusatzstoffe,
und
20 bis 70% Wasser,

6. Dispersionen gemäß einem oder mehreren der Ansprüche 1 bis 5, enthaltend
a) 0,5 bis 20% Diflufenican und 0,5 bis 30% Flurtamone,
b) 0,2 bis 5% eines oder mehrerer anionischer Tenside aus der Gruppe der Naphthalinsulfonate oder aus der Gruppe der Kondensationsprodukte von Naphthalinsulfonaten mit Formaldehyd,
c) 0,5 bis 14% eines oder mehrerer nichtionischer Tenside aus der Gruppe der Di- und Tri-block-copolymere aus Alkylenoxiden,
d) 0,1 bis 5% einer oder mehrerer mehrbasiger organischer Säuren,
e) 0,05 bis 2,5% eines oder mehrerer Verdicker,
f) 0 bis 40% eines oder mehrerer von Komponente a) verschiedener agrochemischer Wirkstoffe, vorzugsweise 0,5 bis 22% Flufenacet,
g) 0 bis 15% eines oder mehrerer weiterer üblicher Hilfs- und Zusatzstoffe,
und
20 bis 60% Wasser.

7. Dispersionen gemäß einem oder mehreren der Ansprüche 1 bis 6, enthaltend
a) 2 bis 16% Diflufenican und 4 bis 22% Flurtamone,
b) 0,3 bis 1,5% eines oder mehrerer anionischer Tenside aus der Gruppe der Naphthalinsulfonate oder aus der Gruppe der Kondensationsprodukte von Naphthalinsulfonaten mit Formaldehyd,
c) 1 bis 10% eines oder mehrerer nichtionischer Tenside aus der Gruppe der Di- und Tri-block-copolymere aus Alkylenoxiden,
d) 0,2 bis 2% einer oder mehrerer mehrbasiger organischer Säuren,
e) 0,075 bis 1,5% eines oder mehrerer Verdicker,
f) 4 bis 22% Flufenacet,
g) 0 bis 15% eines oder mehrerer weiterer üblicher Hilfs- und Zusatzstoffe,
und
30 bis 55% Wasser.

8. Verfahren zur Herstellung einer wässrigen Dispersion gemäß einem oder mehreren der Ansprüche 1 bis 7, worin die Komponenten gemischt und gegebenenfalls vermahlen werden.

9. Verwendung einer wässrigen Dispersion gemäß einem oder mehreren der Ansprüche 1 bis 7, zur Herstellung eines herbiziden Mittels.

10. Verwendung gemäß Anspruch 9, worin das herbizide Mittel eine Suspension oder Suspoemulsion ist.

11. Verfahren zur Bekämpfung von unerwünschtem Pflanzenwuchs, worin eine wirksame Menge einer wässrigen Dispersion gemäß einem oder mehreren der Ansprüche 1 bis 7 auf die Pflanzen, Teile der Pflanzen, das Saatgut oder die Fläche auf der Pflanzen wachsen, appliziert wird.

12. Verwendung einer wässrigen Dispersion gemäß einem oder mehreren der Ansprüche 1 bis 7, zur Bekämpfung von unerwünschtem Pflanzenwuchs.

13. Flüssiges herbizides Mittel, erhältlich durch Verdünnen einer wässrigen Dispersion gemäß einem oder mehreren der Ansprüche 1 bis 7.

14. Flüssiges herbizides Mittel gemäß Anspruch 13, worin das herbizide Mittel eine Emulsion, Suspension, Suspoemulsion oder Lösung ist.

15. Flüssiges herbizides Mittel, enthaltend
a) Diflufenican und Flurtamone,
b) ein oder mehrere anionische Tenside aus der Gruppe der Naphthalinsulfonate oder aus der Gruppe der Kondensationsprodukte von Naphthalinsulfonaten mit Formaldehyd,
c) ein oder mehrere nichtionische Tenside aus der Gruppe der Di- und Tri-blockcopolymere aus Alkylenoxiden,
d) eine oder mehrere mehrbasige organische Säuren,
und
Wasser.

16. Flüssiges herbizides Mittel gemäß Anspruch 15, zusätzlich enthaltend
e) einen oder mehrere Verdicker,
f) einen oder mehrere von Komponente a) verschiedene agrochemische Wirkstoffe, vorzugsweise Flufenacet,
g) einen oder mehrere weitere übliche Hilfs- und Zusatzstoffe.

17. Verfahren zur Bekämpfung von unerwünschtem Pflanzenwuchs, worin eine wirksame Menge eines herbiziden Mittels gemäß einem oder mehreren der Ansprüche 13 bis 16 auf die Pflanzen, Teile der Pflanzen, das Saatgut oder die Fläche auf der Pflanzen wachsen, appliziert wird.

18. Verwendung eines herbiziden Mittels gemäß einem oder mehreren der Ansprüche 13 bis 16, zur Bekämpfung von unerwünschtem Pflanzenwuchs.

## Claims

1. Aqueous dispersion which comprises:
a) the herbicidal active substances diflufenican and flurtamone,
b) one or more anionic surfactants from the group consisting of the naphthalenesulfonates or from the group consisting of the condensation products of naphthalenesulfonates with formaldehyde,
c) one or more nonionic surfactants from the group consisting of the di- and triblock copolymers of alkylene oxides,
d) one or more polybasic organic acids,
and
water.

2. Dispersion according to Claim 1, which additionally comprises one or more thickeners (component e)).

3. Dispersion according to Claim 1 or 2, which additionally comprises one or more agrochemical active substances other than component a) (component f)), preferably the herbicidal active substance flufenacet.

4. Dispersion according to one or more of Claims 1 to 3, which additionally comprises one or more additional standard auxiliaries and additives (component g)).

5. Dispersion according to one or more of Claims 1 to 4, which comprises
a) 0.1 to 50% of diflufenican and 0.1 to 50% of flurtamone,
b) 0.1 to 10% of one or more anionic surfactants from the group consisting of the naphthalenesulfonates or from the group consisting of the condensation products of naphthalenesulfonates with formaldehyde,
c) 0.1 to 20% of one or more nonionic surfactants from the group consisting of the di- and triblock copolymers of alkylene oxides,
d) 0.05 to 10% of one or more polybasic organic acids,
e) 0 to 5% of one or more thickeners,
f) 0 to 50% of one or more agrochemical active substances other than component a), preferably 0.1 to 50% of flufenacet,
g) 0 to 20% of one or more additional standard auxiliaries and additives,
and
20 to 70% of water.

6. Dispersion according to one or more of Claims 1 to 5, which comprises
a) 0.5 to 20% of diflufenican and 0.5 to 30% of flurtamone,
b) 0.2 to 5% of one or more anionic surfactants from the group consisting of the naphthalenesulfonates or from the group consisting of the condensation products of naphthalenesulfonates with formaldehyde,
c) 0.5 to 14% of one or more nonionic surfactants from the group consisting of the di- and triblock copolymers of alkylene oxides,
d) 0.1 to 5% of one or more polybasic organic acids,
e) 0.05 to 2.5% of one or more thickeners,
f) 0 to 40% of one or more agrochemical active substances other than component a), preferably 0.5 to 22% of flufenacet,
g) 0 to 15% of one or more additional standard auxiliaries and additives,
and
20 to 60% of water.

7. Dispersion according to one or more of Claims 1 to 6, which comprises
a) 2 to 16% of diflufenican and 4 to 22% of flurtamone,
b) 0.3 to 1.5% of one or more anionic surfactants from the group consisting of the naphthalenesulfonates or from the group consisting of the condensation products of naphthalenesulfonates with formaldehyde,
c) 1 to 10% of one or more nonionic surfactants from the group consisting of the di- and triblock copolymers of alkylene oxides,
d) 0.2 to 2% of one or more polybasic organic acids,
e) 0.075 to 1.5% of one or more thickeners,
f) 4 to 22% of flufenacet,
g) 0 to 15% of one or more additional standard auxiliaries and additives,
and
30 to 55% of water.

8. Process for the preparation of an aqueous dispersion according to one or more of Claims 1 to 7, which comprises the mixing of the components and optionally the milling thereof.

9. Use of an aqueous dispersion according to one or more of Claims 1 to 7 in the preparation of a herbicidal composition.

10. Use according to Claim 9, wherein the herbicidal composition is a suspension or suspoemulsion.

11. Process for combating undesirable plant growth, which comprises the application of an effective amount of an aqueous dispersion according to one or more of Claims 1 to 7 to the plants, plant parts, seed or the area on which plants are growing.

12. Use of an aqueous dispersion according to one or more of Claims 1 to 7 in combating undesirable plant growth.

13. Liquid herbicidal composition which can be obtained by diluting an aqueous dispersion according to one or more of Claims 1 to 7.

14. Liquid herbicidal composition according to Claim 13, the herbicidal composition being an emulsion, suspension, suspoemulsion or solution.

15. Liquid herbicidal composition which comprises:
a) diflufenican and flurtamone,
b) one or more anionic surfactants from the group consisting of the naphthalenesulfonates or from the group consisting of the condensation products of naphthalenesulfonates with formaldehyde,
c) one or more nonionic surfactants from the group consisting of the di- and triblock copolymers of alkylene oxides,
d) one or more polybasic organic acids,
and
water.

16. Liquid herbicidal composition according to Claim 15, which additionally comprises
e) one or more thickeners,
f) one or more agrochemical active substances other than component a), preferably flufenacet,
g) one or more additional standard auxiliaries and additives.

17. Process for combating undesirable plant growth, which comprises the application of an effective amount of a herbicidal composition according to one or more of Claims 13 to 16 to the plants, plant parts, seed or the area on which plants are growing.

18. Use of a herbicidal composition according to one or more of Claims 13 to 16 in combating undesirable plant growth.

## Revendications

1. Dispersions aqueuses, contenant
a) les substances actives herbicides diflufénican et flurtamone,
b) un ou plusieurs tensioactifs anioniques choisis dans le groupe des naphtalènesulfonates ou dans le groupe des produits de condensation de naphtalènesulfonates avec le formaldéhyde,
c) un ou plusieurs tensioactifs non ioniques choisis dans le groupe des copolymères di- et triséquencés d'oxydes d'alkylène,
d) un ou plusieurs acides organiques polybasiques,
et
de l'eau.

2. Dispersions selon la revendication 1, contenant en plus un ou plusieurs épaississants (composant e).

3. Dispersions selon la revendication 1 ou 2, contenant en plus une ou plusieurs substances actives agrochimiques différentes du composant a) (composant f), de préférence la substance active herbicide flufénacet.

4. Dispersions selon une ou plusieurs des revendications 1 à 3, contenant en plus un ou plusieurs autres adjuvants et additifs usuels (composant g).

5. Dispersions selon une ou plusieurs des revendications 1 à 4, contenant
a) 0,1 à 50 % de diflufénican et 0,1 à 50 % de flurtamone,
b) 0,1 à 10 % d'un ou de plusieurs tensioactifs anioniques choisis dans le groupe des naphtalènesulfonates ou dans le groupe des produits de condensation de naphtalènesulfonates avec le formaldéhyde,
c) 0,1 à 20 % d'un ou de plusieurs tensioactifs non ioniques choisis dans le groupe des copolymères di- et triséquencés d'oxydes d'alkylène,
d) 0,05 à 10 % d'un ou de plusieurs acides organiques polybasiques,
e) 0 à 5 % d'un ou de plusieurs épaississants,
f) 0 à 50 % d'une ou de plusieurs substances actives agrochimiques différentes du composant a), de préférence 0,1 à 50 % de flufénacet,
g) 0 à 20 % d'un ou de plusieurs autres adjuvants et additifs usuels
et
20 à 70 % d'eau.

6. Dispersions selon une ou plusieurs des revendications 1 à 5, contenant
a) 0,5 à 20 % de diflufénican et 0,5 à 30 % de flurtamone,
b) 0,2 à 5 % d'un ou de plusieurs tensioactifs anioniques choisis dans le groupe des naphtalènesulfonates ou dans le groupe des produits de condensation de naphtalènesulfonates avec le formaldéhyde,
c) 0,5 à 14 % d'un ou de plusieurs tensioactifs non ioniques choisis dans le groupe des copolymères di- et triséquencés d'oxydes d'alkylène,
d) 0,1 à 5 % d'un ou de plusieurs acides organiques polybasiques,
e) 0,05 à 2,5 % d'un ou de plusieurs épaississants,
f) 0 à 40 % d'une ou de plusieurs substances actives agrochimiques différentes du composant a), de préférence 0,5 à 22 % de flufénacet,
g) 0 à 15 % d'un ou de plusieurs autres adjuvants et additifs usuels
et
20 à 60 % d'eau.

7. Dispersions selon une ou plusieurs des revendications 1 à 6, contenant
a) 2 à 16 % de diflufénican et 4 à 22 % de flurtamone,
b) 0,3 à 1,5 % d'un ou de plusieurs tensioactifs anioniques choisis dans le groupe des naphtalènesulfonates ou dans le groupe des produits de condensation de naphtalènesulfonates avec le formaldéhyde,
c) 1 à 10 % d'un ou de plusieurs tensioactifs non ioniques choisis dans le groupe des copolymères di- et triséquencés d'oxydes d'alkylène,
d) 0,2 à 2 % d'un ou de plusieurs acides organiques polybasiques,
e) 0,075 à 1,5 % d'un ou de plusieurs épaississants,
f) 4 à 22 % de flufénacet,
g) 0 à 15 % d'un ou de plusieurs autres adjuvants et additifs usuels
et
30 à 55 % d'eau.

8. Procédé pour la préparation d'une dispersion aqueuse selon une ou plusieurs des revendications 1 à 7, dans lequel on mélange et éventuellement broie les composants.

9. Utilisation d'une dispersion aqueuse selon une ou plusieurs des revendications 1 à 7, pour la production d'une composition herbicide.

10. Utilisation selon la revendication 9, dans laquelle la composition herbicide est une suspension ou suspoémulsion.

11. Procédé pour la lutte contre la croissance indésirable de plantes, dans lequel on applique sur les plantes, des parties des plantes, les semences ou la surface sur laquelle poussent les plantes une quantité efficace d'une dispersion aqueuse selon une ou plusieurs des revendications 1 à 7.

12. Utilisation d'une dispersion aqueuse selon une ou plusieurs des revendications 1 à 7, pour la lutte contre la croissance indésirable de plantes.

13. Composition herbicide liquide, pouvant être obtenue par dilution d'une dispersion aqueuse selon une ou plusieurs des revendications 1 à 7.

14. Composition herbicide liquide selon la revendication 13, la composition herbicide étant une émulsion, suspension, suspoémulsion ou solution.

15. Composition herbicide liquide, contenant
a) du diflufénican et de la flurtamone,
b) un ou plusieurs tensioactifs anioniques choisis dans le groupe des naphtalènesulfonates ou dans le groupe des produits de condensation de naphtalènesulfonates avec le formaldéhyde,
c) un ou plusieurs tensioactifs non ioniques choisis dans le groupe des copolymères di- et triséquencés d'oxydes d'alkylène,
d) un ou plusieurs acides organiques polybasiques,
et
de l'eau.

16. Composition herbicide liquide selon la revendication 15, contenant en plus
e) un ou plusieurs épaississants,
f) une ou plusieurs substances actives agrochimiques différentes du composant a), de préférence du flufénacet,
g) un ou de plusieurs autres adjuvants et additifs usuels.

17. Procédé pour la lutte contre la croissance indésirable de plantes, dans lequel on applique sur les plantes, des parties des plantes, les semences ou la surface sur laquelle poussent les plantes une quantité efficace d'une composition herbicide selon une ou plusieurs des revendications 13 à 16.

18. Utilisation d'une composition herbicide selon une ou plusieurs des revendications 13 à 16, pour la lutte contre la croissance indésirable de plantes.
